# EUROPÄISCHE PATENTANMELDUNG

(11) **EP 1 215 223 A1**
(43) Veröffentlichungstag der Anmeldung: **19.06.2002**
(21) Anmeldenummer: 01126369.6
(22) Anmeldetag: 07.11.2001
(51) Int. Cl.: C08G 18/08, B32B 15/08, B32B 27/40

(54) **Verbundelemente enthaltend Polyisocyanat-Polyadditionsprodukte**

(30) Priorität: 13.12.2000 DE 10062129
(71) Anmelder: BASF AKTIENGESELLSCHAFT, 67056 Ludwigshafen (DE)
(72) Erfinder: Forster, Heinz, 82515 Wolfratshausen (DE); Hefner, Matthias, 85253 Erdweg (DE); Knoblauch, Georg, 81247 München (DE); Mertes, Jürgen, Dr., 67122 Altrip (DE); Reinerth, Peter, 82275 Emmering (DE); Sandbank, Thomas, 80798 München (DE); Stadler, Edmund, Dr., 96142 Hollfeld (DE)

(57) **Zusammenfassung**

Die Erfindung betrifft Verbundelemente, die folgende Schichtstruktur aufweisen:
(i) 2 bis 20 mm Metall,
(ii) 10 bis 300 mm Polyisocyanat-Polyadditionsprodukte erhältlich durch Umsetzung von (a) Isocyanaten mit (b) gegenüber Isocyanaten reaktiven Verbindungen in Gegenwart von mindestens einer anorganischen Säure sowie mindestens einem Katalysator (d),
(iii) 2 bis 20 mm Metall.

## Beschreibung

Die Erfindung betrifft Verbundelemente, die folgende Schichtstruktur aufweisen:
(i) 2 mm bis 20 mm, bevorzugt 2 mm bis 10 mm, besonders bevorzugt 5 mm bis 10 mm Metall,
(ii) 10 mm bis 300 mm, bevorzugt 10 mm bis 100 mm Polyisocyanat-Polyadditionsprodukte erhältlich durch Umsetzung von (a) Isocyanaten mit (b) gegenüber Isocyanaten reaktiven Verbindungen in Gegenwart von mindestens einer anorganischen Säure sowie mindestens einem Katalysator (d),
(iii) 2 mm bis 20 mm, bevorzugt 2 mm bis 10 mm, besonders bevorzugt 5 mm bis 10 mm Metall.

Des weiteren bezieht sich die Erfindung auf Verfahren zur Herstellung dieser Verbundelemente und deren Verwendung.

Für die Konstruktion von Schiffen, beispielsweise Schiffsrümpfen und Laderaumabdeckungen, Brücken, Dächern oder Hochhäusern müssen Konstruktionsteile verwendet werden, die erheblichen Belastungen durch äußere Kräfte standhalten können. Derartige Konstruktionsteile bestehen aufgrund dieser Anforderungen üblicherweise aus Metallplatten oder Metallträgern, die durch eine entsprechende Geometrie oder geeignete Verstrebungen verstärkt sind. So bestehen Schiffsrümpfe von Tankschiffen aufgrund von erhöhten Sicherheitsnormen üblicherweise aus einem inneren und einem äußeren Rumpf, wobei jeder Rumpf aus 15 mm dicken Stahlplatten, die durch ca. 2 m lange Stahlverstrebungen miteinander verbunden sind, aufgebaut ist. Da diese Stahlplatten erheblichen Kräften ausgesetzt sind, werden sowohl die äußere, als auch die innere Stahlhülle durch aufgeschweißte Verstärkungselemente versteift. Nachteilig an diesen klassischen Konstruktionsteilen wirken sich sowohl die erheblichen Mengen an Stahl aus, die benötigt werden, als auch die zeit- und arbeitsintensive Herstellung. Zudem weisen derartige Konstruktionsteile ein erhebliches Gewicht auf, wodurch sich eine geringere Tonnage der Schiffe und ein erhöhter Treibstoffbedarf ergibt. Zusätzlich sind solche klassischen Konstruktionselemente auf der Basis von Stahl sehr pflegeintensiv, da sowohl die äußeren Oberfläche, als auch die Oberflächen der Stahlteile zwischen der äußeren und inneren Hülle regelmäßig gegen Korrosion geschützt werden müssen.

Als Ersatz für die Stahlkonstruktionen sind SPS-Elemente (Sandwich-plate-system) bekannt, die einen Verbund aus Metall und Kunststoff beinhalten. Durch die Haftung des Kunststoffs an den zwei Metallschichten entstehen Verbundelemente mit außerordentlichen Vorteilen gegenüber bekannten Stahl Konstruktionen. Derartige SPS-Elemente sind bekannt aus den Schriften US 6 050 208, US 5 778 813, DE-A 198 25 083, DE-A 198 25 085, DE-A 198 25 084, DE-A 198 25 087 und DE-A 198 35 727.

Ein wichtiger Parameter bei der Herstellung der Verbundelemente ist die Umsetzung der Ausgangskomponenten zur Herstellung von (ii). Sowohl eine zu langsame wie auch eine zu schnelle Reaktion kann zu unbrauchbaren Produkten führen, die komplett verworfen werden müssen. Sowohl die Beschaffenheit der Metallplatten (i) und (ii) wie auch sonstige äußere Einflüsse, wie z.B. Temperatur, beeinflussen die Umsetzung.

Der vorliegenden Erfindung lag daher die Aufgabe zugrunde, neue Verbundelemente zu entwickeln, die als (ii) Kunststoffe aufweisen, bei deren Herstellung die Umsetzung definiert, kontrolliert und optimiert erfolgt, insbesondere hinsichtlich der Reaktivität von (a) Isocyanaten gegenüber (b) gegenüber Isocyanaten reaktiven Verbindungen.

Diese Aufgabe wurde erfindungsgemäß durch die eingangs beschriebenen Verbundelemente gelöst.

Die anorganischen Säuren werden in dieser Schrift auch als "Inhibitoren" bezeichnet.

Bei Mischungen der Ausgangskomponenten (a) und (b), die - bedingt durch die Auswahl der Polyetherpolyole und/oder Kettenverlängerer/Vernetzer sowie der Isocyanate - bereits eine hohe Eigenreaktivität besitzen und somit nur eine geringe Verarbeitungszeit aufweisen, hat sich er Zusatz von Inhibitoren als vorteilhaft erwiesen. Durch den Zusatz dieser Inhibitoren wird nach dem Vermischen der Ausgangskomponenten eine längere Verarbeitungszeit erreicht, so dass auch große Kavitäten gefüllt werden können. Bevorzugt werden als Inhibitoren Phosphorsäure und/oder Salzsäure eingesetzt, besonders bevorzugt wird Phosphorsäure eingesetzt. Bei Verwendung von anorganischen Säuren- ist jedoch im Gegensatz zu Carbonsäuren nicht mit einer zusätzlichen Treibwirkung durch die Bildung von Kohlendioxid (Isocyanat-Carbonsäure-Reaktion)zu rechnen.

Bevorzugt werden die Inhibitoren in einer Menge von 0,01 bis 2,0 Gew.-%, bevorzugt 0,1 bis 0,5 Gew.-%, bezogen auf das Gewicht der gegenüber Isocyanaten reaktiven Verbindungen (b) eingesetzt.

Bei Mischungen der Ausgangskomponenten (a) und (b), die - bedingt durch die Auswahl der Polyetherpolyole und/oder Kettenverlängerer/Vernetzer sowie der Isocyanate - eine geringe Eigenreaktivität besitzen, kann das gewünschte Aushärteverhalten je nach Formgröße und Komplexität der Kavität durch Katalysatoren/Katalysatorgemische (d) optimiert werden, d.h. ein zur Befüllung der Kavität ausreichendes Fließverhalten der vermischen Ausgangskomponenten bei gleichzeitig möglichst schneller Aushärtung des Polyisocyanat-Polyadditionsproduktes wird angestrebt.

Der gewünschte Härtungsverlauf kann auch mit Mischungen enthaltend anorganische Säuren (z.B. Phosporsäure, Salzsäure) und teilweise oder vollständig neutralisierten tert. Aminen erreicht werden. Diese Salze stellen verzögernd wirkende Katalysatoren dar, die bei Raumtemperatur nicht sehr wirksam sind und so ein Füllen auch großer Kavitäten erlauben. Mit Beginn der exothermen Polyurethan-Reaktion nimmt die katalytische Aktivität rasch zu, so dass ein schnelles Aushärten des Polyisocyanat-Polyadditionsproduktes erreicht wird.

### Bevorzugte Katalysatoren (d) sind z.B.:

### a) Tertiäre Amine, wie z.B.:

1,4-Diazabicyclo-(2,2,2)-octan (DABCO), mit organischen (z.B. Ameisensäure, Essigsäure, 2-Ethylhexansäure) oder anorganischen Säuren (z.B. Phosporsäure, Salzsäure) blockiertes 1,4-Diazabicyclo-(2,2,2)-octan (DABCO), N,N,N,N-Tetramethypolymethylendiamine mit 2-16 Kohlenstoffatomen, N-Methyl-N-dimethylaminoethylpiperazin, thermisch aktivierbare Katalysatoren aus der Verbindungsklasse der 1,8-Diazabicyclo-(5,4,0)undecen-7-ene (DBU), sowie Kombinationen der o.g. Katalysatoren mit Bis(dimethylaminoethyl)ether, N,N,N,N,N-Pentamethyldiethylendiamin oder N,N,N,N,N-Pentamethyldipropylentriamin, bevorzugt 1,4-Diazabicyclo-(2,2,2)-octan (DABCO) bzw. mit organischen (z.B. Ameisensäure, Essigsäure, 2-Ethylhexansäure) oder anorganischen Säuren (z.B. Phosporsäure, Salzsäure) blockiertes 1,4-Diazabicyclo-(2,2,2)-octan (DABCO).

### b) allgemein bekannte Metallkatalysatoren, bevorzugt Sn(II)-und/oder Sn(IV)-verbindungen, wie z.B.:

Zinndioctoat, Zinndiethylhexanoat, Dimethylzinndilaurat, Dibutylzinndilaurat und insbesondere schwefelhaltige Sn-Katalysatoren aus der Verbindungsklasse der Dialkylzinnmercaptide wie z.B. Dibutlydilaurylzinnmercaptid bzw. Mischungen aus Monooctylzinntris(2-ethylhexylthioglycolat) und Dioctylzinn-bis(2-ethylhexylthioglycolat, bevorzugt Mischungen enthaltend Monooctylzinntris(2-ethylhexylthioglycolat) und/oder Dioctylzinn-bis(2-ethylhexylthioglycolat.

Darüber hinaus haben sich auch Mischungen aus tertiären Aminen und den o.g. Metallkatalysatoren als effektiv erwiesen.

Der Gesamtgehalt an Katalysatoren (d) beträgt bevorzugt 0,001 bis 15 Gew.-%, insbesondere 0,01 bis 6 Gew.-%, bezogen auf das Gewicht der insgesamt eingesetzten gegenüber Isocyanaten reaktiven Verbindungen (b).

Erfindungsgemäß wird die Umsetzung von (a) mit (b) somit durch die Zugabe der vorteilhaften Säuren sowie den Katalysatoren (d) in Bezug auf ihre Reaktivität, ihr Umsatzverhalten und ihre Durchhärtung optimiert. Dabei wird sichergestellt, daß auch bei wechselnden äußeren Bedingungen dennoch die Umsetzung zeitlich definiert erfolgt. Sowohl eine zu schnelle Reaktion von (a) mit (b) als auch eine zu langsame Umsetzung wird vermieden. Gerade eine schnell einsetzende Reaktion würde dazu führen, daß der Raum, der vollständig zwischen (i) und (iii) mit (ii) gefüllt werden soll, nicht vollständig von den Rohstoffen eingenommen werden kann. Dies kann zu weiten Bereichen auf der Oberfläche von (i) und (iii) führen, die nicht über (ii) miteinander verbunden sind. Die resultierenden erheblichen Nachteile in den statischen und dynamischen Eigenschaften der Verbundelemente wären nicht zu tolerieren.

Durch das Zusammenspiel von Inhibitoren und Katalysatoren wird somit erfindungsgemäß erreicht, daß das eingesetzte System zur Herstellung von (ii) bevorzugt eine offene Zeit von 5 Minuten bis 10 Minuten aufweist. Unter dem Ausdruck "offene Zeit" ist die Zeit zu verstehen, in der das System enthaltend (a) und (b) verarbeitet, d.h. zwischen (i) und (iii) eingetragen werden kann.

Bevorzugt enthalten die Verbundelemente als (b) Polyetherpolyalkohole, besonders bevorzugt Polymerpolyole.

Bevorzugt enthalten die Verbundelemente als (a) MDI-Isocyanat-Komponenten mit einer Funktionalität größer 2, bevorzugt mit einer Funktionalität > 2,3 und insbesondere mit einer Funktionalität < 2,6. Bei gleichbleibender Polyol-Komponente nimmt dabei die Temperaturstabilität (E-Modul > 275 MPa) mit steigender Funktionalität der Isocyanat-Komponente zu, d.h. über die Wahl des Isocyanats kann die Steifigkeit des Elastomers im SPS beeinflußt und so auf ein bestimmtes Anforderungsprofil abgestimmt werden. Unter dem Ausdruck MDI sind Diphenylmethandiisocyanate zu verstehen. Der Ausdruck Funktionalität bezieht sich auf die durchschnittliche Anzahl von Isocyanatgruppen pro Molekül. Diese Isocyanatkomponenten zeichnen sich dadurch aus, daß sie aus Mischungen aus Diphenylmethan-diisocyanaten und Polyphenyl-polymethylen-polyisocyanaten bestehen und das der Gehalt an 3-Kern, 4-Kern und höherkerningen MDI-Derivaten (Polyphenyl-polymethylen-polyisocyanate) > 10 %, insbesondere > 30 % und bevorzugt > 50 % beträgt, jeweils bezogen auf das Gesamtgewicht der Mischung.

Bevorzugt sind Verbundelemente erhältlich durch Umsetzung von (a) mit (b) in Gegenwart von anorganischen Säuren, (d) und 1 bis 50 Volumen-% Gase (c).

Bevorzugt sind Verbundelement erhältlich durch Umsetzung von (a) mit (b) in Gegenwart von anorganischen Säuren, (d) und (f) Treibmitteln.

Besonders bevorzugt sind Verbundelemente, die folgende Schichtstruktur aufweisen:
(i) 2 mm bis 20 mm, bevorzugt 2 mm bis 10 mm, besonders bevorzugt 5 mm bis 10 mm Metall,
(ii) 10 mm bis 300 mm, bevorzugt 10 mm bis 100 mm Polyisocyanat-Polyadditionsprodukte mit einer Dichte von 350 bis 1100 kg/m³ erhältlich durch Umsetzung von (a) Isocyanaten mit (b) gegenüber Isocyanaten reaktiven Verbindungen in Gegenwart von mindestens einer anorganischen Säure, (d) Katalysatoren sowie gegebenenfalls (f) Treibmitteln, 1 bis 50 Volumen-%, bezogen auf das Volumen der Polyisocyanat-Polyadditionsprodukte, mindestens eines Gases (c) und/oder (e) Hilfs- und/oder Zusatzstoffen,
(iii) 2 mm bis 20 mm, bevorzugt 2 mm bis 10 mm, besonders bevorzugt 5 mm bis 10 mm Metall.

Die Polyisocyanat-Polyadditionsprodukte (ii) der erfindungsgemäß hergestellten Verbundelemente weisen bevorzugt ein Elastizitätsmodul von > 275 MPa im Temperaturbereich von - 45 bis + 90°C (nach DIN 53 457), eine Adhäsion zu (i) und (iii) von > 4 MPa (nach DIN 53 530), eine Dehnung von > 30 % im Temperaturbereich von - 45 bis + 90°C (nach DIN 53504), eine Zugfestigkeit von > 20 MPa (nach DIN 53504) und eine Druckfestigkeit von > 20 MPa (nach DIN 53421) auf.

Die bevorzugten Verbundelemente weisen neben hervorragenden mechanischen Eigenschaften insbesondere den Vorteil auf, daß auch Verbundelemente mit sehr großen Abmessungen zugänglich sind. Derartige Verbundelemente, die erhältlich sind durch Herstellung eines Kunststoffes (ii) zwischen zwei Metallplatten (i) und (iii), waren bislang aufgrund des Schrumpfes des Kunststoffes (ii) während und nach seiner Umsetzung nur eingeschränkt zugänglich. Aufgrund des Schrumpfes des Kunststoffes (ii), beispielsweise der Polyisocyanat-Polyadditionsprodukte, erfolgt eine teilweise Ablösung des Kunststoffes (ii) von den Metallplatten (i) und/oder (iii). Gerade eine möglichst vollständige und sehr gute Haftung des Kunststoffes (ii) an den Metallplatten (i) und/oder (iii) ist aber für die mechanischen Eigenschaften eines solchen Verbundelementes von besonderer Bedeutung. Der Schrumpf kann durch den Einsatz von (f) Treibmitteln, (c) Gasen und/oder Polymerpolyolen als (b) deutlich vermindert werden.

Die Herstellung der erfindungsgemäßen Verbundelemente kann man derart durchführen, daß man zwischen (i) und (iii) Polyisocyanat-Polyadditionsprodukte (ii), üblicherweise Polyurethane, die gegebenenfalls Harnstoff- und/oder Isocyanuratstrukturen aufweisen können, durch Umsetzung von (a) Isocyanaten mit (b) Polymerpolyolen in Gegenwart von mindestens einer anorganischen Säure, (d) Katalysatoren, bevorzugt in Gegenwart von Treibmitteln (f), bevorzugt in Gegenwart von 1 bis 50 Volumen-%, bezogen auf das Volumen der Polyisocyanat-Polyadditionsprodukte, mindestens eines Gases (c), bevorzugt in Gegenwart von (e) Hilfs- und/oder Zusatzstoffen herstellt, die an (i) und (iii) haften.

Bevorzugt wird die Umsetzung in einer geschlossenen Form durchgeführt, d.h. (i) und (iii) befinden sich bei der Befüllung mit den Ausgangskomponenten zur Herstellung von (ii) in einer Form, die nach der vollständigen Eintragung der Ausgangskomponenten verschlossen wird. Nach der Umsetzung der Ausgangskomponenten zur Herstellung von (ii) kann das Verbundelement entformt werden.

Bevorzugt kann man die Oberflächen von (i) und/oder (iii), an die (ii) nach der Herstellung der Verbundelemente haftet, mit Sand oder Stahlkugeln bestrahlen. Dieses Sandstrahlen kann nach üblichen Verfahren erfolgen. Beispielsweise kann man die Oberflächen unter hohem Druck mit üblichem Sand bestrahlen und damit beispielsweise reinigen und Aufrauhen. Geeignete Apparaturen für eine solche Behandlung sind kommerziell erhältlich.

Durch diese Behandlung der Oberflächen von (i) und (iii), die nach der Umsetzung von (a) mit (b) in Kontakt mit (ii) stehen, führt zu einer deutlich verbesserten Haftung von (ii) an (i) und (iii). Das Sandstrahlen wird bevorzugt direkt vor der Einbringung der Komponenten zur Herstellung von (ii) in den Raum zwischen (i) und (iii) durchgeführt. Die Oberflächen von (i) und (iii), an die (ii) haften soll, sind bevorzugt frei von anorganischen und/oder organischen Stoffen, die eine Haftung vermindern, beispielsweise Ölen und Fetten oder allgemein als Formtrennmitteln bekannten Stoffen.

Nach der bevorzugten Behandlung der Oberflächen von (i) und (iii) werden diese Schichten bevorzugt in geeigneter Anordnung, beispielsweise parallel zueinander, fixiert. Der Abstand wird üblicherweise so gewählt, daß der Raum zwischen (i) und (iii) eine Dicke von 10 bis 300 mm aufweist. Die Fixierung von (i) und (iii) kann beispielsweise durch Abstandhalter erfolgen. Die Ränder des Zwischenraumes können bevorzugt derart abgedichtet werden, daß der Raum zwischen (i) und (iii) zwar mit (a), (b) und (f) sowie gegebenenfalls (d) und/oder (e) und/oder (c) gefüllt werden kann, ein Herausfließen dieser Komponenten aber verhindert wird. Das Abdichten kann mit üblichen Kunststoff- oder Metallfolien und/oder Metallplatten, die auch als Abstandhalter dienen können, erfolgen.

Die Schichten (i) und (iii) können bevorzugt als übliche Metallplatten, beispielsweise Stahlplatten, mit den erfindungsgemäßen Dicken eingesetzt werden.

Die Befüllung des Raumes zwischen (i) und (iii) kann sowohl in vertikaler Ausrichtung von (i) und (iii), als auch in horizontaler Ausrichtung von (i) und (iii) erfolgen.

Das Befüllen des Raumes zwischen (i) und (iii) mit (a) und (b) sowie gegebenenfalls den weiteren Ausgangsstoffen kann mit üblichen Fördereinrichtungen, bevorzugt kontinuierlich, durchgeführt werden, beispielsweise mit Hoch- und Niederdruckmaschinen, vorzugsweise Hochdruckmaschinen.

Die Förderleistung kann in Abhängigkeit des zu befüllenden Volumens variiert werden. Um eine homogene Durchhärtung von (ii) zu gewährleisten, wird die Förderleistung und Fördereinrichtung derart gewählt, daß der zu befüllende Raum innerhalb von 0,5 bis 20 min mit den Komponenten zur Herstellung von (ii) gefüllt werden kann.

Sowohl (i) als auch (ii) können beschichtet, beispielsweise grundiert, lackiert und/oder mit üblichen Kunststoffen beschichtet bei der Herstellung der erfindungsgemäßen Verbundelemente eingesetzt werden. Bevorzugt werden (i) und (iii) unbeschichtet und besonders bevorzugt beispielsweise durch übliches Sandstrahlen gereinigt eingesetzt.

Die Herstellung der Polyisocyanat-Polyadditionsprodukten (ii), üblicherweise Polyurethan- und gegebenenfalls Polyisocyanuratprodukten, insbesondere Polyurethanelastomeren, durch Umsetzung von (a) Isocyanaten mit (b) gegenüber Isocyanaten reaktiven Verbindungen in Gegenwart von anorganischen Säuren, (d) Katalysatoren sowie gegebenenfalls (f) und/oder (e) Hilfsmitteln und/oder Zusatzstoffen und/oder (c) ist vielfach beschrieben worden.

Die Ausgangsstoffe (a), (b), (c), (e) und (f) in dem erfindungsgemäßen Verfahren werden im Folgenden beispielhaft beschrieben:

Als Isocyanate (a) kommen die an sich bekannten aliphatischen, cycloaliphatischen, araliphatischen und/oder aromatischen Isocyanate, bevorzugt Diisocyanate in Frage, die gegebenenfalls nach allgemein bekannten Verfahren biuretisiert und/oder isocyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat (TDI), 4,4'-, 2,4'- und/oder 2,2'-Diphenylmethandiisocyanat (MDI), Polyphenylpolymethylen-polyisocyanate und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden. Bevorzugt werden 2,4'-, 2,2'- und/oder 4,4'-MDI und/oder Polyphenylpolymethylen-polyisocyanate eingesetzt, besonders bevorzugt Mischungen enthaltend Polyphenylpolymethylen-polyisocyanate und mindestens eines der MDI-Isomere.

Als (b) gegenüber Isocyanaten reaktive Verbindungen können beispielsweise Verbindungen eingesetzt werden, die als gegenüber Isocyanaten reaktive Gruppen Hydroxyl-, Thiol- und/oder primäre und/oder sekundäre Aminogruppen aufweisen und üblicherweise ein Molekulargewicht von 60 bis 10000 g/mol aufweisen, z.B. Polyole ausgewählt aus der Gruppe der Polyetherpolyalkohole, Polyesterpolyalkohole, Polythioether-polyole, hydroxylgruppenhaltigen Polyacetale und hydroxylgruppenhaltigen aliphatischen Polycarbonate oder Mischungen aus mindestens zwei der genannten Polyole. Diese Verbindungen weisen üblicherweise eine Funktionalität gegenüber Isocyanaten von 2 bis 6 und ein Molekulargewicht von 400 bis 8000 auf und sind dem Fachmann allgemein bekannt.

Beispielsweise kommen als Polyetherpolyalkohole, die nach bekannter Technologie durch Anlagerung von Alkylenoxiden, beispielsweise Tetrahydrofuran, 1,3-Propylenoxid, 1,2- bzw. 2,3-Butylenoxid, Styroloxid und vorzugsweise Ethylenoxid und/oder 1,2-Propylenoxid an übliche Startersubstanzen erhältlich sind. Als Startersubstanzen können beispielsweise bekannte aliphatische, araliphatische, cycloaliphatische und/oder aromatische Verbindungen eingesetzt werden, die mindestens eine, bevorzugt 2 bis 4 Hydroxylgruppen und/oder mindestens eine, bevorzugt 2 bis 4 Aminogruppen enthalten. Beispielsweise können als Startersubstanzen Ethandiol, Diethylenglykol, 1,2- bzw. 1,3-Propandiol, 1,4-Butandiol, 1,5-Pentandiol, 1,6-Hexandiol, 1,7-Heptandiol, Glycerin, Trimethylolpropan, Neopentylglykol, Zucker, beispielsweise Saccharose, Pentaerythrit, Sorbitol, Ethylendiamin, Propandiamin, Neopentandiamin, Hexamethylendiamin, Isophorondiamin, 4,4'-Diaminodicyclohexylmethan, 2-(Ethylamino)-ethylamin, 3-(Methylamino)propylamin, Diethylentrimamin, Dipropylentriamin und/oder N,N'-Bis(3-aminopropyl)-ethylendiamin eingesetzt werden.

Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen.

Als Polymerpolyole, einer speziellen Klasse von Polyetherpolyolen, können allgemein aus der Polyurethanchemie bekannte Verbindungen eingesetzt werden, bevorzugt Styrol-Acrylnitril-Pfropfpolyole.

Gerade der Einsatz von Polymerpolyolen kann den Schrumpf des Polyisocyanat-Polyadditionsproduktes, beispielsweise des Polyurethans deutlich vermindern und somit zu einer verbesserten Haftung von (ii) an (i) und (iii) führen. Gegebenenfalls können als weiteren Maßnahmen, den Schrumpf zu verringern, bevorzugt Treibmittel (f) und/oder Gase (c) eingesetzt werden.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Die Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Die erfindungsgemäßen Verbundelemente werden bevorzugt unter Verwendung von Polyetherpolyalkoholen als Komponente (b) zur Umsetzung mit den Isocyanaten hergestellt, zweckmäßigerweise solche mit einer mittleren Funktionalität gegenüber Isocyanaten von 1,5 bis 8, bevorzugt 2 bis 6, und einem Molekulargewicht von 400 bis 8000.

Die Verwendung von Polyetherpolyalkoholen bietet erhebliche Vorteile durch eine verbesserte Stabilität der Polyisocyanat-Polyadditionsprodukte gegen eine hydrolytische Spaltung und aufgrund der geringeren Viskosität, jeweils im Vergleich mit Polyesterpolyalkoholen. Die verbesserte Stabilität gegen Hydrolyse ist insbesondere bei einem Einsatz im Schiffbau vorteilhaft. Die geringere Viskosität der Polyetherpolyalkohole und der Reaktionsmischung zur Herstellung von (ii) enthaltend die Polyetherpolyalkohole ermöglicht eine schnellere und einfachere Befüllung des Raumes zwischen (i) und (iii) mit der Reaktionsmischung zur Herstellung der Verbundelemente. Aufgrund der erheblichen Abmessungen insbesondere von Konstruktionsteilen im Schiffbau sind niedrigviskose Flüssigkeiten von erheblichem Vorteil.

Als gegenüber Isocyanaten reaktive Verbindungen sind des weiteren Substanzen geeignet, die ein Kohlenwasserstoffgerüst mit 10 bis 40 Kohlenstoffatomen und 2 bis 4 gegenüber Isocyanaten reaktive Gruppen aufweisen. Unter dem Ausdruck Kohlenwasserstoffgerüst ist eine ununterbrochene Abfolge von Kohlenstoffatomen zu verstehen, die nicht wie beispielsweise im Falle von Ethern mit Sauerstoffatomen unterbrochen ist. Als solche Substanzen, im Folgenden auch als (b3) bezeichnet, können beispielsweise Rizinusöl und deren Derivate eingesetzt werden.

Als gegenüber Isocyanaten reaktive Verbindungen können des weiteren zusätzlich zu den genannten Verbindungen mit einem üblichen Molekulargewicht von 400 bis 8000 gegebenenfalls Diole und/oder Triole mit Molekulargewichten von 60 bis < 400 als Kettenverlängerungs- und/oder Vernetzungsmittel bei dem erfindungsgemäßen Verfahren eingesetzt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 auf. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan, niedermolekulare hydroxylgruppenhaltige Polyalkylenoxide auf Basis Ethylen- und/oder 1,2-Propylenoxid und den vorgenannten Diolen und/oder Triolen als Startermoleküle und/oder Diamine wie z.B. Diethyltoluendiamin und/oder 3,5-Dimethylthio-2,4-toluenediamin.

Sofern zur Herstellung der Polyisocyaynat-Polyadditionsprodukten Kettenverlängerungsmittel, Vernetzungsmittel oder Mischungen davon Anwendung finden, kommen diese zweckmäßigerweise in einer Menge von 0 bis 30 Gew.-%, vorzugsweise von 1 bis 30 Gew.-%, bezogen auf das Gewicht der insgesamt eingesetzten gegenüber Isocyanaten reaktiven Verbindungen (b), zum Einsatz.

Außerdem können als (b) aliphatische, araliphatische, cycloaliphatische und/oder aromatische Carbonsäuren zur Optimierung des Härtungsverlaufes bei der Herstellung von (ii) eingesetzt werden. Beispiele für solche Carbonsäuren sind Ameisensäure, Essigsäure, 2-Ethylhexansäure, Bernsteinsäure, Oxalsäure, Malonsäure, Glutarsäure, Adipinsäure, Zitronensäure, Benzoesäure, Salicylsäure, Phenylessigsäure, Phthalsäure, Toluolsulfonsäure, Derivate der genannten Säuren, Isomere der genannten Säuren und beliebigen Mischungen der genannten Säuren. Der Gewichtsanteil dieser Säuren kann 0 bis 5 Gew.-%, bevorzugt 0,2 bis 2 Gew.-%, bezogen auf das Gesamtgewicht von (b), betragen.

Mit dem Einsatz von Amin-gestarteten Polyetherpolyalkoholen kann zudem das Durchhärteverhalten von der Reaktionsmischung zur Herstellung von (ii) verbessert werden. Bevorzugt werden die Verbindungen (b), wie auch die anderen Komponenten zur Herstellung von (ii), mit einem möglichst geringen Gehalt an Wasser eingesetzt, um die Bildung von Kohlendioxid durch Reaktion des Wassers mit Isocyanatgruppen zu vermeiden.

Als Komponente (c) zur Herstellung von (ii) können allgemein bekannte Verbindungen eingesetzt werden, die einen Siedepunkt bei einem Druck von 1 bar von kleiner (d.h. bei niedrigeren Temperaturen als) - 50°C aufweisen, beispielsweise Luft, Kohlendioxid, Stickstoff, Helium und/oder Neon. Bevorzugt wird Luft eingesetzt. Die Komponente (c) ist bevorzugt gegenüber der Komponente (a), besonders bevorzugt gegenüber den Komponenten (a) und (b) inert, d.h. eine Reaktivität des Gases gegenüber (a) und (b) ist kaum, bevorzugt nicht nachzuweisen. Der Einsatz des Gases (c) unterscheidet sich grundlegend von dem Einsatz üblicher Treibmittel zur Herstellung von geschäumten Polyurethanen. Während übliche Treibmittel (f) flüssig eingesetzt werden oder im Falle der gasförmigen physikalischen Treibmittel in der Polyol-Komponente bis zu einem geringen Prozentsatz löslich sind) und während der Umsetzung entweder aufgrund der Wärmeentwicklung verdampfen oder aber im Falle des Wassers aufgrund der Reaktion mit den Isocyanatgruppen gasförmiges Kohlendioxid entwickeln, wird in der vorliegenden Erfindung die Komponente (c) bevorzugt bereits gasförmig als Aerosol beispielsweise in der Polyolkomponente eingesetzt.

Der Reaktionsmischung zur Herstellung der Polyisocyanat-Polyadditionsprodukte (ii) können gegebenenfalls (e) Hilfsmittel und/oder Zusatzstoffe einverleibt werden. Genannt seien beispielsweise Füllstoffe, oberflächenaktive Substanzen, Farbstoffe, Pigmente, Flammschutzmittel, Hydrolyseschutzmittel, fungistatische, bakteriostatisch wirkende Substanzen und Schaumstabilisatoren.

Als oberflächenaktive Substanzen kommen z.B. Verbindungen in Betracht, welche zur Unterstützung der Homogenisierung der Ausgangsstoffe dienen und gegebenenfalls auch geeignet sind, die Struktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen (b), angewandt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-Polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten gegenüber Isocyanaten reaktiven Verbindungen, zu verwenden.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und Glasfasern geringer Länge. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern. Die anorganischen und organischen Füllstoffe können einzeln oder als Gemische verwendet werden.

Bevorzugt setzt man bei der Herstellung von (ii) 10 bis 70 Gew.-% Füllstoffe, bezogen auf das Gewicht von (ii), als (e) Hilfs- und/oder Zusatzstoffe ein. Als Füllstoffe verwendet man bevorzugt Talkum, Kaolin, Calziumcarbonat, Schwerspat, Glasfasern und/oder Mikroglaskugeln. Die Größe der Partikel der Füllstoffe ist bevorzugt so zu wählen, daß das Eintragen der Komponenten zur Herstellung von (ii) in den Raum zwischen (i) und (iii) nicht behindert wird. Besonders bevorzugt weisen die Füllstoffe Partikelgrößen von < 0,5 mm auf.

Die Füllstoffe werden bevorzugt in Mischung mit der Polyolkomponente bei der Umsetzung zur Herstellung der Polyisocyanat-Polyadditionsprodukte eingesetzt.

Die Füllstoffe können dazu dienen, den im Vergleich beispielsweise zum Stahl größeren thermischen Ausdehnungskoeffizient der Polyisocyanat-Polyadditionsprodukte zu verringern und damit dem des Stahls anzupassen. Dies für einen nachhaltig festen Verbund zwischen den Schichten (i), (ii) und (iii) besonders vorteilhaft, da damit geringere Spannungen zwischen den Schichten bei thermischer Belastung auftreten.

Bevorzugt werden zur Herstellung von (ii) als (e) übliche Schaumstabilisatoren eingesetzt, die kommerziell erhältlich und dem Fachmann allgemein bekannt sind, beispielsweise allgemein bekannte Polysiloxan-Polyoxyalkylen-Blockcopolymere, z.B. Tegostab 2219 der Firma Goldschmidt. Der Anteil an diesen Schaumstabilisatoren bei der Herstellung von (ii) beträgt bevorzugt 0,001 bis 10 Gew.-%, besonders bevorzugt 0,01 bis 10 Gew.-%, insbesondere 0,01 bis 2 Gew.-%, bezogen auf das Gewicht der zur Herstellung von (ii) eingesetzten Komponenten (b), (e) und gegebenenfalls (d). Der Einsatz dieser Schaumstabilisatoren bewirkt, das die Komponente (c) in der Reaktionsmischung zur Herstellung von (ii) stabilisiert wird.

Als Treibmittel (f) können aus der Polyurethanchemie allgemein bekannte Treibmittel eingesetzt werden, beispielsweise physikalische und/oder chemische Treibmittel. Derartige physikalische Treibmittel weisen im allgemeinen einen Siedepunkt bei einem Druck von 1 bar von größer (d.h. bei höheren Temperaturen als) -50°C auf. Beispiele für physikalische Treibmittel sind z.B. FCKW, HFCKW, HFKW, aliphatische Kohlenwasserstoffe, cycloaliphatische Kohlenwasserstoffe, jeweils beispielsweise mit 4 bis 6 Kohlenstoffatomen oder Gemische dieser Stoffe, beispielsweise Trichlorfluormethan (Siedepunkt 24°C), Chlordifluormethan (Siedepunkt - 40,8°C), Dichlorfluorethan (Siedepunkt 32°C), Chlordifluorethan (Siedepunkt - 9,2°C), Dichlortrifluorethan (Siedepunkt 27,1°C), Terafluorethan (Siedepunkt - 26,5°C), Hexafluorbutan (Siedepunkt 24,6°C), iso-Pentan (Siedepunkt 28°C), n-Pentan (Siedepunkt 36°C), Cyclopentan (Siedepunkt 49°C).

Als chemische Treibmittel, d.h. Treibmittel die aufgrund einer Reaktion, beispielsweise mit Isocyanatgruppen, gasförmige Produkte bilden, kommen beispielsweise Wasser, Hydratwasser haltige Verbindungen, Carbonsäuren, tert.-Alkohole, z.B. t-Butanol, Carbamate, beispielsweise die in der Schrift EP-A 1000955, insbesondere auf den Seiten 2, Zeilen 5 bis 31 sowie Seite 3, Zeilen 21 bis 42 beschrieben Carbamate, Carbonate, z.B. Ammoniumcarbonat und/oder Ammoniumhydrogencarbonat und/oder Guanidincarbonat in Betracht.

Bevorzugt werden als Treibmittel (f) Wasser und/oder Carbamate eingesetzt.

Bevorzugt werden die Treibmittel (f) in einer Menge eingesetzt, die ausreicht, um die bevorzugte Dichte von (ii) zu erhalten.
Dies kann mit einfachen Routineexperimenten, die dem Fachmann allgemein geläufig sind, ermittelt werden. Besonders bevorzugt werden die Treibmittel (f) in einer Menge von 0,05 bis 10 Gew.-%, insbesondere von 0,1 bis 5 Gew.-%, jeweils bezogen auf das Gesamtgewicht der Polyisocyanat-Polyadditionsprodukte, eingesetzt.

Das Gewicht von (ii) entspricht per Definition dem Gewicht der zur Herstellung von (ii) eingesetzten Komponenten (a), (b) und (c) sowie gegebenenfalls (d) und/oder (e).

Zur Herstellung der erfindungsgemäßen Polyisocyanat-Polyadditionsprodukte werden die Isocyanate und die gegenüber Isocyanaten reaktiven Verbindungen in solchen Mengen zur Umsetzung gebracht, daß das Äquivalenzverhältnis von NCO-Gruppen der Isocyanate (a) zur Summe der reaktiven Wasserstoffatome der gegenüber Isocyanaten reaktiven Verbindungen (b) und gegebenenfalls (f) 0,85 bis 1,25 : 1, vorzugsweise 0,95 bis 1,15 : 1 und insbesondere 1 bis 1,05 : 1, beträgt. Falls (ii) zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyisocyanat-Polyadditionsprodukte werden üblicherweise nach dem one-shot-Verfahren oder nach dem Prepolymerverfahren, beispielsweise mit Hilfe der Hochdruck- oder Niederdruck-Technik hergestellt.

Als besonders vorteilhaft hat es sich erwiesen, nach dem Zweikomponentenverfahren zu arbeiten und die gegenüber Isocyanaten reaktiven Verbindungen (b), gegebenenfalls die Treibmittel (f) und gegebenenfalls die Katalysatoren (d) und/oder Hilfs- und/oder Zusatzstoffe (e) in der Komponente (A) zu vereinigen und bevorzugt innig miteinander zu vermischen und als Komponente (B) die Isocyanate (a) zu verwenden.

Die Komponente (c) kann der Reaktionsmischung enthaltend (a), (b) und gegebenenfalls (f), (d) und/oder (e) zugeführt werden, und/oder den einzelnen, bereits beschriebenen Komponenten (a), (b), (A) und/oder (B). Die Komponente, die mit (c) gemischt wird, liegt üblicherweise flüssig vor. Bevorzugt wird die Komponenten in die Komponente (b) gemischt.

Das Mischen der entsprechenden Komponente mit (c) kann nach allgemein bekannten Verfahren erfolgen. Beispielsweise kann (c) durch allgemein bekannte Beladungseinrichtungen, beispielsweise Luftbeladungseinrichtungen, bevorzugt unter Druck, beispielsweise aus einem Druckbehälter oder durch einen Kompressor komprimiert, z.B. durch eine Düse der entsprechenden Komponente zugeführt werden. Bevorzugt erfolgt eine weitgehende Durchmischung der entsprechende Komponenten mit (c), so daß Gasblasen von (c) in der üblicherweise flüssigen Komponente bevorzugt eine Größe von 0,0001 bis 10, besonders bevorzugt 0,0001 bis 1 mm aufweisen.

Der Gehalt an (c) in der Reaktionsmischung zur Herstellung von (ii) kann in der Rücklaufleitung der Hochdruckmaschine mit allgemein bekannten Meßgeräten über die Dichte der Reaktionsmischung bestimmt werden. Die Gehalt an (c) in der Reaktionsmischung kann über eine Kontrolleinheit bevorzugt automatisch auf der Grundlage dieser Dichte reguliert werden. Die Komponentendichte kann während der üblichen Zirkulation des Materials in der Maschine auch bei sehr niedriger Zirkulationsgeschwindigkeit online bestimmt und reguliert werden.

Das Sandwichelement kann beispielsweise hergestellt werden, indem man den zwischen (i) und (iii) mit den Ausgangskomponenten zur Herstellung von (ii) zu befüllenden Raum mit Ausnahme von einer Zuleitung und Ableitung für die Ausgangskomponenten abdichtet, und die Ausgangskomponenten (a), (b) und gegebenenfalls (c), (d), (f) und/oder (e) bevorzugt gemischt über die Zuleitung, bevorzugt mit einer üblichen Hochdruckmaschine, in den Raum zwischen (i) und (iii) füllt.

Die Ausgangskomponenten werden üblicherweise bei einer Temperatur von 0 bis 100°C, vorzugsweise von 20 bis 60°C, gemischt und wie bereits beschrieben in den Raum zwischen (i) und (iii) eingebracht. Die Vermischung kann mechanisch mittels eines Rührers oder einer Rührschnecke, bevorzugt aber durch das bei Hochdruckmaschinen übliche Gegenstromprinzip erfolgen, bei dem A- und B-Komponenten-Strahl sich im Mischkopf unter jeweils hohem Druck treffen und vermischen, wobei der Strahl einer jeden Komponente auch geteilt sein kann. Die Reaktionstemperatur, d.h. die Temperatur, bei die Umsetzung erfolgt, beträgt üblicherweise > 20°C, bevorzugt 50 bis 150°C.

Entsprechend finden die erfindungsgemäß erhältlichen Verbundelemente Verwendung vor allem in Bereichen, in denen Konstruktionselemente benötigt werden, die großen Kräften standhalten, beispielsweise als Konstruktionsteile im Schiffsbau, z.B. in Schiffsrümpfen, beispielsweise Schiffsdoppelrümpfe mit einer äußeren und einer inneren Wand, und Laderaumabdeckungen, Laderaumtrennwänden, Ladeklappen oder in Bauwerken, beispielsweise Brücken oder als Konstruktionselemente im Hausbau, insbesondere in Hochhäusern.

Die erfindungsgemäßen Verbundelemente sind nicht mit klassischen Sandwichelementen zu verwechseln, die als Kern einen Polyurethan- und/oder Polyisocyanurathartschaumstoff enthalten und üblicherweise zur thermischen Isolierung eingesetzt werden. Derartige bekannte Sandwichelemente wären aufgrund ihrer vergleichsweise geringeren mechanischen Belastbarkeit nicht für die genannten Anwendungsbereiche geeignet.

Bei den erfindungsgemäßen Polyisocyanat-Polyadditionsprodukten handelt es sich bevorzugt um kompakte Produkte, d.h. Produkte, die nicht aus einem Netzwerk von Zellen, die über Stege und Zellwände zusammenhängen und mit Gas gefüllt sind, bestehen.

## Patentansprüche

1. Verbundelemente, die folgende Schichtstruktur aufweisen:
(i) 2 bis 20 mm Metall,
(ii) 10 bis 300 mm Polyisocyanat-Polyadditionsprodukte erhältlich durch Umsetzung von (a) Isocyanaten mit (b) gegenüber Isocyanaten reaktiven Verbindungen in Gegenwart von mindestens einer anorganischen Säure sowie mindestens einem Katalysator (d),
(iii) 2 bis 20 mm Metall.

2. Verbundelemente nach Anspruch 1 enthaltend Phosphorsäure als anorganische Säure.

3. Verbundelemente nach Anspruch 1 enthaltend als (d) tertiäre Amine und/oder Metallkatalysatoren.

4. Verbundelemente nach Anspruch 1 enthaltend als (b) Polymerpolyole.

5. Verbundelemente nach Anspruch 1 enthaltend als (a) MDI-Isocyanat-Komponenten mit einer Funktionalität größer 2.

6. Verbundelemente nach Anspruch 1 erhältlich durch Umsetzung in Gegenwart von 1 bis 50 Volumen-% Gasen (c).

7. Verbundelement nach Anspruch 1 erhältlich durch Umsetzung in Gegenwart von (f) Treibmitteln.

8. Verbundelemente, die folgende Schichtstruktur aufweisen:
(i) 2 bis 20 mm Metall,
(ii) 10 bis 300 mm Polyisocyanat-Polyadditionsprodukte mit einer Dichte von 350 bis 1100 kg/m³ erhältlich durch Umsetzung von (a) Isocyanaten mit (b) gegenüber Isocyanaten reaktiven Verbindungen in Gegenwart von mindestens einer anorganischen Säure, (d) Katalysatoren sowie gegebenenfalls (f) Treibmitteln, 1 bis 50 Volumen-%, bezogen auf das Volumen der Polyisocyanat-Polyadditionsprodukte, mindestens eines Gases (c) und/oder (e) Hilfs- und/oder Zusatzstoffen,
(iii) 2 bis 20 mm Metall.

9. Verfahren zur Herstellung von Verbundelementen nach einem der Ansprüche 1 bis 8, **dadurch gekennzeichnet, daß** man zwischen (i) und (iii) Polyisocyanat-Polyadditionsprodukte (ii) durch Umsetzung von (a) Isocyanaten mit (b) gegenüber Isocyanaten reaktiven Verbindungen in Gegenwart von mindestens einer anorganischen Säure sowie mindestens einem Katalysator (d) herstellt, die an (i) und (iii) haften.

10. Verwendung von Verbundelementen nach einem der Ansprüche 1 bis 8 als Konstruktionsteile im Schiffbau oder in Bauwerken.

11. Schiffe oder Bauwerke enthaltend Verbundelemente nach einem der Ansprüche 1 bis 8.
